# EUROPÄISCHE PATENTSCHRIFT

(11) **EP 0 431 419 B1**
(45) Veröffentlichungstag und Bekanntmachung des Hinweises auf die Patenterteilung: **21.09.1994**
(21) Anmeldenummer: 90122423.8
(22) Anmeldetag: 23.11.1990
(51) Int. Cl.: F16J 15/36, F27D 23/00, F16L 27/12

(54) **Gleitringdichtung zum Abdichten eines drehbaren Rohres gegen ein stehendes Gehäuse**
Mechanical seal and device for sealing a rotating pipe against a fixed casing
Garniture mécanique et dispositif pour assurer l'étanchéité d'un tuyau en rotation contre un bâti fixe

(30) Priorität: 07.12.1989 EP 89122577
(43) Veröffentlichungstag der Anmeldung: 12.06.1991
(73) Patentinhaber: SIEMENS AKTIENGESELLSCHAFT, 80333 München (DE)
(72) Erfinder: Karlheinz Unverzagt, Dipl.-Ing., W-6050 Offenbach (DE)

(56) Entgegenhaltungen:
- EP-A- 0 255 662
- EP-A- 0 274 090
- DE-A- 1 475 621
- DE-B- 1 192 967

## Beschreibung

Die Erfindung betrifft eine Gleitringdichtung zum Abdichten eines drehbaren Rohres gegen ein stehendes Gehäuse mit einem mit dem Rohr verbundenen koaxial zum Rohr angeordneten mit dem Rohr drehbaren Dichtring, mit einem mit dem Gehäuse über einen flexiblen Kompensator zum Kompensieren von Längenänderungen des Rohres verbundenen Gegenring, der mit einer stirnseitigen Dichtfläche an eine stirnseitige Dichtfläche des Dichtrings zum Abdichten des Gehäuses gegen das Rohr anpreßbar ist, und mit mindestens einer Schiene, die am stehenden Gehäuse befestigt ist und auf der mindestens eine Rolle abgestützt und rollend verschiebbar ist.

Derartige Gleitringdichtungen und geeignete Verfahren zum Abdichten eines drehbaren Rohres gegen ein stehendes Gehäuse sind bekannt. Dabei wird in der Regel ein Kompensator eingesetzt, der aus einem flexiblen Material, beispielsweise aus einem impregnierten Gewebe, besteht. Dieser Kompensator ist notwendig, damit unterschiedliche Wärmedehnungen des Rohres und des Gehäuses kompensiert werden können und es nicht zu Beschädigungen an einem der Bauteile kommen kann. Unterschiedliche Wärmedehnungen von Rohr und Gehäuse sind besonders dann zu erwarten, wenn in dem Rohr eine Temperaturänderung infolge einer Verbrennung stattfindet. Das einem Gehäuse zugeordnete Rohr kann beispielsweise eine aus der EP-A-0 302 310 bekannte Schweltrommel sein. Dabei befindet sich im stehenden Gehäuse ein Gasraum, der durch die Gleitringdichtung gegen den Innenraum des Rohres, in dem eine Verschwelung von Abfall stattfindet, abgedichtet sein muß. Die Schweltrommel ist ein Bestandteil einer Anlage zur Durchführung eines Schwel-Brenn-Verfahrens.

Da der Gegenring bei bekannten Gleitringdichtungen nur über den flexiblen Kompensator mit dem Gehäuse verbunden ist, der keine feste Verbindung darstellt, ist es erforderlich, den Gegenring und den Kompensator mit einem geeigneten Mittel in der gewünschten Lage zu halten. Dazu sind bisher verschiedenartige Tragkonstruktionen eingesetzt worden. Beispielsweise ist über der Anlage, die Gehäuse und Rohr umfaßt, ein Galgen angeordnet, auf dessen Ausleger eine Laufkatze verschiebbar positioniert ist. Der Gegenring ist dann mit Seilen oder Ketten an dieser Laufkatze aufgehängt. Es ist auch möglich, den Gegenring durch eine auf dem Boden des Raumes, in dem sich die Anlage befindet, beweglich angeordnete Konstruktion zu unterstützen.

Aus der DE-AS 1 192 967 ist eine Abdichtung zum Abdichten eines Drehrohrofens von einer Staubkammer bekannt. Dabei steht ein sich drehendes Gleitsegment des Drehrohrofens mit einem stehenden Gleitsegment in Kontakt. Das stehende Gleitsegment ist über einen in axialer Richtung längenveränderlichen Körper mit der Staubkammer verbunden. Dieser Körper, der aus zwei Ringen besteht, zwischen denen eine elastische Hülse angeordnet ist, weist Rollen auf, die auf einer horizontalen Konsole bewegt werden können. Die Kombination aus Rollen und Konsole dient nur dazu, die beiden Ringe des Körpers abzustützen. Eine Anpreßkraft zwischen den beiden Gleitsegmenten wird durch die Kombination nicht hervorgerufen.

Es ist jedoch erforderlich, daß das stehende Gleitsegment, bzw. der positionierte Gegenring gegen das sich drehende Gleitsegment bzw. gegen den Dichtring gepreßt wird. Erst dadurch ist ein gasdichter Verschluß möglich. Bisher wurden dazu mechanische, pneumatische oder hydraulische Mittel eingesetzt. Übliche Mittel sind Klammern, die Dichtring und Gegenring am Umfang umfassen. Eine solche Klammer ist auch in der DE-AS 1 192 967 bildlich dargestellt. Die Klammern sind mit mechanischen Federn ausgestattet, können aber auch mit Pneumatikzylindern oder mit Hydraulikzylindern ausgestattet sein. Die Klammern pressen den Dichtring und den Gegenring gegeneinander.

Die üblichen Tragkonstruktionen oder Tragvorrichtungen für Gegenring und Kompensator erfordern eine aufwendige Überwachung, da sie bei wärmebedingten Verschiebungen des Gegenringes nachgeführt werden müssen. Es muß darauf geachtet werden, daß der Gegenring in der Tragvorrichtung stets stabil gehalten wird und nicht von der Tragvorrichtung abrutscht. Die üblichen Mittel zum Anpressen des Gegenringes an den Dichtring bedürfen ebenfalls einer ständigen Überwachung. Es muß darauf geachtet werden, daß die Anspreßkraft der mechanischen Feder, des Pneumatikzylinders oder des Hydraulikzylinders stets ausreichend groß ist.

Der Erfindung liegt die Aufgabe zugrunde, eine Gleitringdichtung anzugeben, bei der der Gegenring auf dem Dichtring stets ausreichend zentriert positioniert ist, ohne daß die Position einer Tragvorrichtung überwacht werden muß. Darüber hinaus soll auch eine Gleitringdichtung angegeben werden, bei der zum Anpressen des Gegenringes an den Dichtring keine Mittel erforderlich sind, die einer häufigen Überwachung bedürfen.

Die Aufgabe wird gemäß der Erfindung dadurch gelöst, daß an der Umfangsfläche des Gegenringes die mindestens eine Rolle, deren Drehachse senkrecht auf der Umfangsfläche des Gegenringes steht, zum Tragen des Gegenringes und des Kompensators angeordnet ist und daß zum Anpressen des Gegenringes an den Dichtring die Schiene gegen die Richtung der Achse des drehbaren Dichtringes mit einem Gefälle zum Dichtring hin geneigt ist und für die Rollen eine schiefe Ebene bildet.

Damit wird der Vorteil erzielt, daß der Gegenring und der Kompensator platzsparend gehalten werden. Darüberhinaus ist ein Nachführen einer Tragvorrichtung nicht erforderlich. Bei einer möglichen Wärmedehnung des Rohres, was eine Verschiebung des Dichtringes in Achsrichtung zur Folge hat, wird der an den Dichtring angepresste Gegenring mitgenommen. Dabei bewegen sich die Rollen auf den Schienen. Bedingt durch das Rollen- Schienen-System finden die Rollen in jeder Position eine gleich gute Abstützung. Ein aufwendiges Nachführen eines Hebezeuges nach einer wärmebedingten axialen Verschiebung des Dichtringes und des Gegenringes ist also nicht erforderlich. Damit entfallen auch für eine solche Nachführung sonst notwendige motorgetriebene Geräte.

Der Gegenring und der Kompensator werden platzsparend gehalten. Außerdem ist ohne Nachführung eines Hebezeuges stets ein optimaler Unterstützungspunkt gegeben.

Dadurch bedingt, daß die Schiene für die Rollen eine schiefe Ebene bildet, greift an die Rollen stets eine auf den Dichtring hin gerichtete Komponente der Schwerkraft an. Mit dieser Kraft wird der Gegenring gegen den Dichtring gedrückt. Bei geeignetem Gefälle der Schienen, es wird beispielsweise eine Neigung von 15° bis 40°, insbesondere von 25°, gegen die Horizontale gewählt, reicht die Schwerkraftkomponente aus, um den Gegenring gasdicht an den Dichtring anzupressen.

Mit diesem Mittel zum Anpressen des Gegenringes an den Dichtring wird der Vorteil erzielt, daß stets eine ausreichend große Anpreßkraft gegeben ist, ohne daß Anpreßmittel, wie mechanische Federn, pneumatische oder hydraulische Zylinder erforderlich wären, deren Funktion laufend überwacht werden müßte. Es sind auch keine zusätzlichen Geräte, wie beispielsweise Kompressoren erforderlich, die zum Betrieb von Hydraulikzylindern benötigt würden.

Beispielsweise ist an den Dichtring an zwei gegenüberliegende stirnseitige Dichtflächen jeweils eine stirnseitige Dichtfläche eines von zwei Gegenringen anpreßbar. Auf diese Weise ist das Rohr gegen zwei Gehäuse abzudichten. Dabei ist jeder der beiden Gegenringe über einen eigenen Kompensator mit seinem Gehäuse verbunden. Auch sind an jedem Gegenring Rollen angeordnet, die sich auf am Gehäuse befestigten Schienen bewegen können. Die Gleitringdichtung zum Abdichten eines drehbaren Rohres gegen zwei stehende Gehäuse entspricht also einer spiegelsymmetrischen Verdopplung der Gleitringdichtung für ein Rohr und ein Gehäuse. An den einzigen Dichtring des einzigen Rohres schließen sich dabei beidseitig Gegenringe an, die über Kompensatoren mit den Gehäusen verbunden sind.

Eine solche Gleitringdichtung ist vorteilhaft einsetzbar, wenn zwei Gasströme voneinander zu trennen sind. Dabei kann es sich bei einer Verbrennung, insbesondere bei dem erwähnten Schwel-Brenn-Verfahren, um ein zuzuführendes Gas und um ein abzuführendes Gas handeln.

Beispielsweise ist parallel zu einer Schiene, auf der eine Rolle zu bewegen ist, eine weitere Schiene als Führungsschiene derart angeordnet, daß die Rolle zwischen beiden Schienen geführt ist. Die Rolle in Verbindung mit den beiden Schienen bildet eine Verdrehsicherung für den Gegenring. Der Gegenring kann folglich nicht durch von außen einwirkende Kräfte um seine Achse gedreht werden. Damit ist auch ausgeschlossen, daß der Kompensator durch eine solche Bewegung beschädigt oder sogar zerstört wird. Ein Drehen des Gegenringes könnte nämlich dazu führen, daß der Kompensator zerreißt.

Die Rolle weist beispielsweise enseitig oder beidseitig einen Spurkranz auf zur Führung auf der Schiene bzw. auf der Führungsschiene. Die Rolle kann also ähnlich wie ein Eisenbahnrad aufgebaut sein. Sie kann auch zwei Spurkränze aufweisen und dann die Gestalt eines Spindelrades haben. Eine mit Spurkranz versehene Rolle kann bei möglicherweise auftretenden radialen Verschiebungen des Gegenringes nicht von der Schiene weggedrückt werden. Bei Verwendung nur eines Spurkranzes ist die Rolle in einer Richtung radial zum Gegenring gehalten. Bei Verwendung von zwei Spurkränzen ist sie darüber hinaus auch in entgegengesetzter Richtung gehalten. Damit wird der Vorteil erzielt, daß die Rolle nicht nur bei Drehbewegungen des Gegenringes, sondern auch bei radialen seitlichen Bewegungen des Gegenringes nicht von der Schiene abgehoben oder entfernt werden kann.

Beispielsweise weist die Rolle beidseitig jeweils einen Spurkranz auf, wobei der Abstand der Spurkränze voneinander und damit auch die Breite der Lauffläche der Rolle geringfügig größer ist als die Breite der Schiene bzw. der Führungsschiene. Auf diese Weise ist für radiale Bewegungen des Gegenringes ein geringes Spiel vorhanden.

Beispielsweise ist der Abstand zwischen der Schiene und der Führungsschiene geringfügig größer als der Abrolldurchmesser der Rolle. Dadurch sind geringfügige Drehbewegungen des Gegenringes möglich. Durch den Spielraum der Rolle zwischen den Schienen kommt es nicht zu Spannungen im Material. Eine Beschädigung des Kompensators durch derartige geringfügige Drehbewegungen ist nicht zu erwarten. Die Rolle ist trotz des Spielraumes zwischen den Schienen gehalten, da der Gesamtdurchmesser der Rolle mit Spurkranz größer ist als der Abstand zwischen der Schiene und der Führungsschiene.

Beispielsweise weist der Gegenring in der Seite, die mit dem Dichtring in Kontakt tritt, Nuten zur Aufnahme von Schmier- oder Gleitmittel auf. Mit der Verwendung von Schmier- oder Gleitmittel wird einerseits eine gasdichte Abdichtung von Dichtring und Gegenring gegeneinander und andererseits ein leichtes Gleiten der Ringe aufeinander gewährleistet.

Beispielsweise sind die Nuten auf dem Gegenring gleichmäßig verteilt und schräg zum Durchmesser des Gegenringes angeordnet. Damit wird eine optimale Verteilung des Schmier- bzw. Gleitmittels sichergestellt.

Beispielsweise sind die Schienen über ein Gelenk mit dem stehenden Gehäuse verbunden, wodurch ihr Neigungswinkel gegen die Achse des drehbaren Dichtringes variabel ist. Damit wird der Vorteil erzielt, daß die Anpreßkraft, mit der der Gegenring gegen den Dichtring gepreßt wird, ebenfalls veränderbar ist. Die Anpreßkraft kann durch Verändern des Neigungswinkels vorteilhaft den jeweiligen Erfordernissen angepaßt werden. Der Neigungswinkel kann sogar im Betriebszustand, das heißt, während sich das Rohr dreht, verändert werden.

Mit der Gleitringdichtung nach der Erfindung wird der Vorteil erzielt, daß man mit wenig Raum auskommt und daß eine zuverlässige Abdichtung ohne aufwendige, nachführbare Tragevorrichtungen und auch ohne aufwendige Mittel zum Anpressen, wie z. B. Hydraulikzylinder oder Motoren, erreicht wird.

Die Gleitringdichtung nach der Erfindung wird anhand der Zeichnung näher erläutert:
- FIG 1: zeigt eine Gleitringdichtung, bei der ein drehbares Rohr gegen ein stehendes Gehäuse abgedichtet ist.
- FIG 2: zeigt eine andere Ausführungsform einer Gleitringdichtung, bei der ein drehbares Rohr gegen ein stehendes Gehäuse abgedichtet ist.
- FIG 3: zeigt eine Gleitringdichtung, bei der ein drehbares Rohr gegen zwei stehende Gehäuse abgedichtet ist.
- FIG 4: zeigt eine andere Ausführungform einer Gleitringdichtung, bei der ein drehbares Rohr gegen zwei stehende Gehäuse abgedichtet ist.
- FIG 5: zeigt einen Schnitt durch eine Rolle, die zwei Spurkränze aufweist.
- FIG 6: zeigt einen mit Nuten versehenen Gegenring.
- FIG 7: zeigt als Teil einer Gleitringdichtung ein Gelenk, mit dem eine Schiene am Gehäuse angeordnet ist.

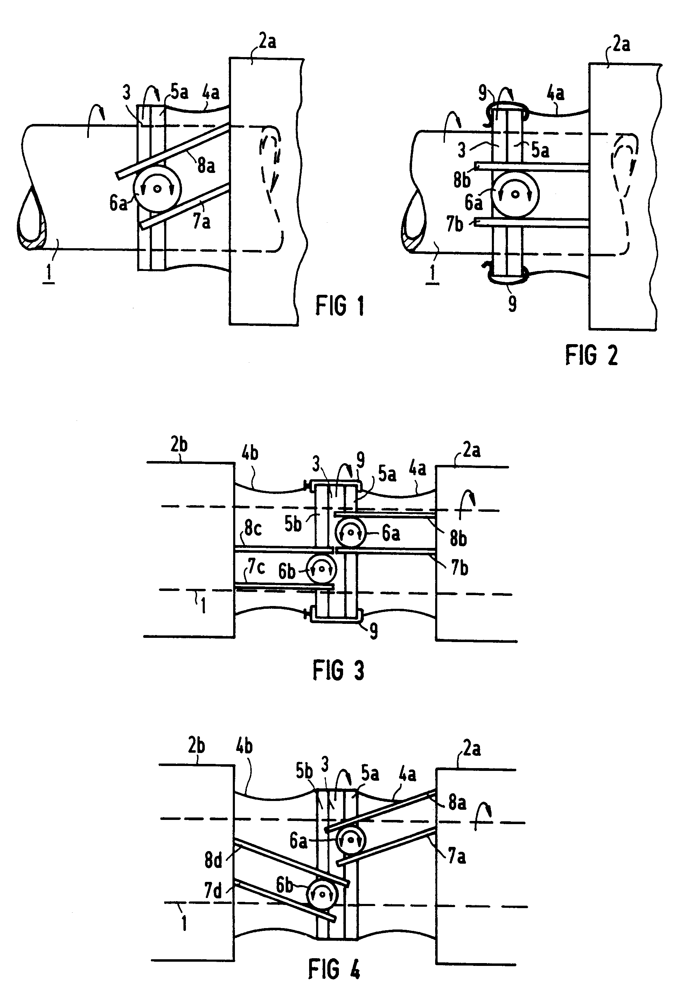

Nach Figur 1 ist zum Abdichten eines um seine Längsachse drehbaren Rohres 1 gegen ein stehendes Gehäuse 2a mit dem Rohr 1 ein aufgeschobener Dichtring 3 verbunden. Der Dichtring 3 dreht sich mit dem Rohr 1 mit. Mit dem stehenden Gehäuse 2a ist über einen flexiblen, rohrförmigen Kompensator 4a ein Gegenring 5a verbunden. Der flexible Kompensator 4a besteht aus einem gasdichten flexiblen Gewebe. Zum Halten des Gegenringes 5a relativ zum Dichtring 3 ist auf der Umfangsfläche des Gegenrings 5a eine Rolle 6a drehbar angeordnet, deren Drehachse senkrecht zur Achse des Gegenringes 5a gerichtet ist. Der Rolle 6a ist mindestens eine erste Schiene 7a zugeordnet. Die Rolle 6a stützt sich auf der Schiene 7a ab. Die erste Schiene 7a ist schräg zur Rohrachse angeordnet und mit dem Gehäuse 2a fest verbunden. Die Rolle 6a und die erste Schiene 7a sind so angeordnet, daß der Gegenring 5a zentriert auf dem Dichtring 3 positioniert ist. Um eine Bewegung der Rolle 6a in der Zeichenebene nach oben zu verhindern, ist der Rolle 6a eine zweite Schiene, die als eine Führungsschiene 8a bezeichnet wird, zugeordnet. Diese verläuft parallel zur Schiene 7a und ist ebenfalls mit dem Gehäuse 2a fest verbunden. Damit der Gegenring 5a nicht nur zentriert zum Dichtring 3 gehalten wird, sondern auch gegen den Dichtring 3 angepreßt wird, sind die Schiene 7a und auch die gegebenenfalls vorhandene Führungsschiene 8a schräg zur Rohrachse angeordnet. Dabei weisen die Schienen 7a und 8a vom Gehäuse 2a aus in Richtung des Gegenringes 5a ein Gefälle auf. Der Winkel zur Horizontalen oder Rohrachse beträgt beispielsweise zwischen 15° und 30°. Insbesondere werden 25° gewählt. Die Schiene 7a bildet für die Rolle 6a eine schiefe Ebene. Eine Komponente der Gewichtskraft der Rolle 6a, des Gegenringes 5a und teilweise des Kompensators 4a drückt bei der gezeigten Konstruktion den Gegenring 5a gegen den Dichtring 3. Die Anpreßkraft ist dabei so groß, daß auf zusätzliche Verbindungsmittel verzichtet werden kann. Auf der in Figur 1 nicht sichtbaren gegenüberliegenden Seite des Kompensators 4 ist eine weitere gleichartige Anordnung aus Schiene 7a und Rolle 6a und gegebenenfalls Führungsschiene 8a angeordnet. Die Gleitringdichtung kann auch mit beidseitig nur je einer Schiene 7a auskommen.

Nach Figur 2 kann eine erste Schiene 7b für die Rolle 6a auch rohrachsparallel, d.h. hier horizontal verlaufen. Auch kann parallel zur horizontal verlaufenden Schiene 7b eine zweite horizontale Führungsschiene 8b vorhanden sein, was in Figur 2 ebenfalls gezeigt ist. Bei Verwendung einer horizontalen Schiene 7a und gegebenenfalls einer Führungsschiene 8a muß ein zusätzliches Mittel zum Anpressen des Gegenringes 5a gegen den Dichtring 3 eingesetzt werden. Geeignet ist beispielsweise eine bekannte, mit mechanischen Federn ausgerüstete Klammer oder Federklammer 9. Im übrigen ist die Gleitringdichtung nach Figur 2 baugleich mit derjenigen nach Figur 1.

Nach Figur 3 ist mit einer Gleitringdichtung ein gestrichelt gezeigtes, drehbares Rohr 1 gegen zwei stehende Gehäuse 2a und 2b abgedichtet. Mit dem Rohr 1 ist ein aufgeschobener Dichtring 3 verbunden, der sich mit dem Rohr 1 mitdreht. Mit dem ersten Gehäuse 2a ist über einen ersten flexiblen Kompensator 4a ein erster Gegenring 5a verbunden, dessen Stirnseite einer Stirnseite des Dichtringes 3 zugeordnet und zugewandt ist. Entsprechend ist mit dem zweiten Gehäuse 2b über einen zweiten flexiblen Kompensator 4b ein zweiter Gegenring Sb verbunden. Die Stirnseite dieses zweiten Gegenringes 5b ist der vom ersten Gegenring 5a abgewandten Stirnseite des Dichtringes 3 zugeordnet und zugewandt. Zum Halten der Gegenringe 5a und 5b und der flexiblen Kompensatoren 4a und 4b sind senkrecht auf dem Umfang des ersten Gegenringes 5a eine erste Rolle 6a und entsprechend auf dem Umfang des zweiten Gegenringes 5b eine zweite Rolle 6b drehbar angeordnet. Die erste Rolle 6a ist unten auf einer ersten horizontalen Schiene 7b abgestützt, die parallel zur Rohrachse außerhalb des Kompensators 4a angeordnet und mit dem ersten Gehäuse 2a verbunden ist. Entsprechend ist die zweite Rolle 6b unten auf einer zweiten horizontalen Schiene 7c abgestützt, die mit dem zweiten Gehäuse 2b verbunden ist. Wie in den Figuren 1 und 2 sind den Schienen 7b und 7c parallele Führungsschienen 8b bzw.8c zugeordnet.

Die beiden Schienen 7b und 7c können sich jeweils vom ersten Gehäuse 2a bis zum zweiten Gehäuse 2b erstrecken, und sie können mit den beiden Gehäusen 2a und 2b verbunden sein, wenn mit einer Bewegung der beiden Gehäuse 2a und 2b gegeneinander, die durch unterschiedliche Wärmedehnungen der Gehäuse 2a und 2b verursacht sein kann, nicht gerechnet werden muß. Der Abstand der beiden Schienen 7b und 7c kann dann so gewählt sein, daß die erste Schiene 7b mit der Führungsschiene 8c der zweiten Rolle 6b eine Schiene bildet. Als obere Führungsschiene 8b der ersten Rolle 6a kann eine dritte Schiene in geeignetem Abstand oberhalb der ersten Schiene 7b angeordnet sein. Bei Verwendung von horizontal verlaufenden Schienen 7b, 7c und Führungsschienen 8b, 8c dienen die Rollen 6a und 6b nur zum zentrierten Halten der beiden Gegenringe 5a und 5b. Zum Anpressen der Gegenringe 5a und 5b an den Dichtring 3 sind z.B. handelsübliche u-förmige Klammern 9 vorgesehen. In Figur 3 ist nicht sichtbar, daß auf der den Rollen 6a und 6b gegenüberliegenden Seite der Gegenringe 5a und 5b und der Kompensatoren 4a und 4b gleichartige Rollen 6a und 6b und gleichartige Schienen 7b, 7c und gegebenenfalls Führungsschienen 8b, 8c angeordnet sind.

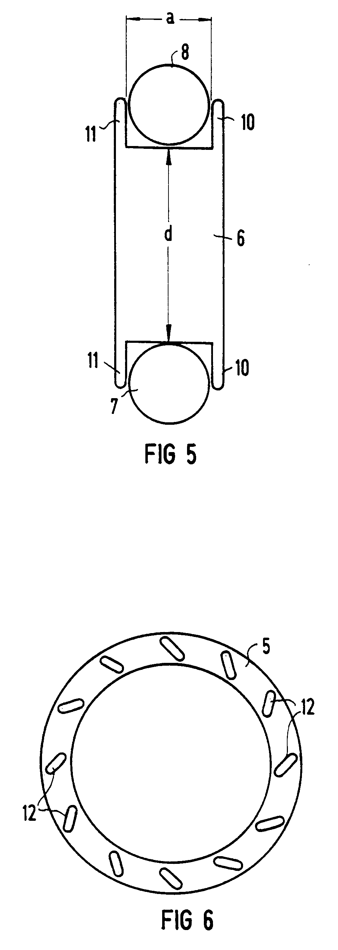

Nach Figur 4 ist, damit bei einer Gleitringdichtung zum Anpressen der beiden Gegenringe 5a und 5b an den Dichtring 3 die Klammern 9 nicht erforderlich sind, die erste Rolle 6a, ähnlich wie in Figur 1 gezeigt, auf einer schrägen ersten Schiene 7a abgestützt. Die erste Schiene 7a weist ein auf den Dichtring 3 hin gerichtetes Gefälle auf. Entsprechend ist die zweite Rolle 6b auf einer zweiten schrägen Schiene 7d abgestützt, die ebenfalls ein auf den Dichtring 3 hin gerichtetes Gefälle aufweist. Wie schon in Figur 1 gezeigt, reichen die Komponenten der Gewichtskräfte der Rollen 6a und 6b aus, um die beiden Gegenringe 5a und 5b aus entgegengesetzter Richtung an den Dichtring 3 anzupressen. Zur Führung der Rollen 6a und 6b kann jeder Rolle 6a und 6b eine mit dem jeweiligen Gehäuse 2a bzw. 2b verbundene Führungsschiene 8a bzw. 8d zugeordnet sein.

Die Schienen 7a und 7d sowie die Führungsschienen 8a und 8d verlaufen jeweils gegeneinander geneigt. Auf der nicht sichtbaren gegenüberliegenden Seite der Gegenringe 5a und 5b und der Kompensatoren 4a und 4b sind weitere Rollen 6a und 6b sowie weitere Schienen 7a und 7d und gegebenenfalls weitere Führungsschienen 8a und 8d angeordnet. Die Gegenringe 5a und 5b sind wie bei Figur 3 mit den zugeordneten Gehäusen 2a bzw. 2b über flexible Kompensatoren 4a und 4b verbunden.

Nach Figur 5 weist eine Rolle 6 beidseitig je einen Spurkranz 10 und 11 auf. Die Rolle 6 läuft auf einer unteren Schiene 7 runden Querschnitts. Durch eine Führungsschiene 8 runden Querschnitts oberhalb der Rolle 6 wird ein Abheben der Rolle 6 von der Schiene 7 verhindert. Die Spurkränze 10, 11 verhindern, daß die Rolle 6 von der Schiene 7 oder von den Schienen 7 und 8 heruntergleitet. Wenn ein Heruntergleiten nur in einer Richtung zu verhindern ist, reicht ein einseitiger Spurkranz 10 an der Rolle 6 aus. Damit für die Rolle 6 ein geringer Bewegungsspielraum verbleibt, sollte der Abrolldurchmesser d der Rolle 6 geringfügig kleiner als der Abstand zwischen der Schiene 7 und der Führungsschiene 8 sein. Ebenso sollte der Abstand a zwischen zwei Spurkränzen 10 und 11 der Rolle 6 geringfügig größer sein als der Durchmesser der Schiene 7 und der Führungsschiene 8. Dadurch ist ein seitlicher Bewegungsspielraum für die Rolle 6 gegeben.

Nach Figur 6 sind zur Aufnahme von Gleitmittel oder Schmiermittel, das eine besonders gute gasdichte Abdichtung ermöglicht, auf einem Gegenring 5 auf der dem Dichtring 3 zugewandten Seite Nuten 12 angeordnet. Die Nuten 12 verlaufen beispielsweise schräg zum Durchmesser des Gegenringes 5. Sie berühren den Rand des Gegenringes 5 nicht.

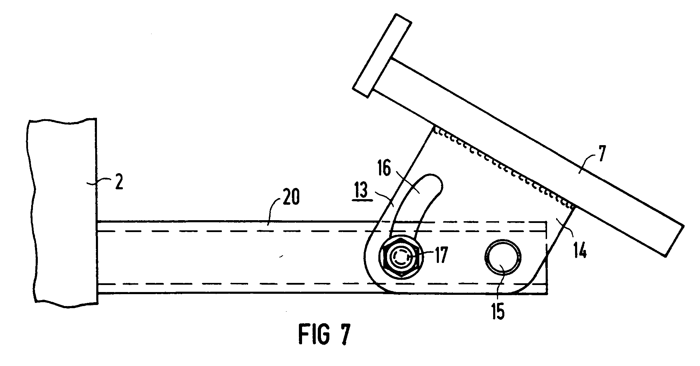

Figur 7 zeigt ein Gelenk 13, mit dem die in den Figuren 1 und 4 gezeigten Schienen 7a, 7d mit dem Gehäuse 2a, 2b verbunden sein können. Mit diesem Gelenk 13 kann das Gefälle der Schienen 7a, 7d variiert werden. Das Gelenk 13 nach Figur 7 besteht aus einem an der Schiene 7 angeformten flachen Körper 14, der mit einem Bolzen 15 als Drehachse mit einem an das Gehäuse 2 angeformten stangenförmigen Bauteil 20 verbunden ist. Im Körper 14 befindet sich ein Spalt 16, der die Form eines den Bolzen 15 umgebenden Kreisbogens hat. In diesen Spalt 16 greift eine mit dem Bauteil 20 fest verbundene Feststellschraube 17 ein. Die Neigung der Schiene 7 kann stufenlos verstellt werden. Dabei wird die Schiene 7 jeweils durch die Feststellschraube 17 arretiert. Eine Führungsschiene 8 kann gegebenenfalls im erforderlichen Abstand mit der Schiene 7 fest gekoppelt sein.

Zusammenfassend kann man sagen:
Zum Abdichten des drehbaren Rohres 1 gegen ein oder zwei stehende Gehäuse 2a, 2b sind einem Dichtring 3,
der mit dem Rohr 1 verbunden ist, ein oder zwei feststehende Gegenringe 5, 5a, 5b zugeordnet, die mit dem Gehäuse 2a, 2b über Kompensatoren 4a, 4b verbunden sind. Ein Gegenring 5, 5a, 5b wird zum Dichtring 3 zentriert gehalten durch Rollen 6, 6a, 6b, die auf seinem Umfang angeordnet und auf Schienen 7, 7a, 7b, 7c, 7d abgestützt sind. Der Gegenring 5, 5a, 5b wird gegen den Dichtring 3 durch eine Komponente der Gewichtskraft der Rolle 6, 6a, 6b, des Gegenrings 5, 5a, 5b und des Kompensators 4a, 4b angepreßt. Dazu ist die Rolle 6, 6a, 6b auf einer Schiene 7, 7a, 7d abgestützt, die mit dem Gehäuse 2a, 2b verbunden ist und in Richtung auf den Dichtring 5, 5a, 5b ein Gefälle aufweist.

Ein Abheben der Rollen 6, 6a, 6b von den Schienen 7, 7a, 7b, 7c, 7d wird verhindert durch oberhalb der Rollen 6, 6a, 6b angeordnete Führungsschienen 8, 8a, 8b, 8c, 8d, die parallel zu den Schienen 7, 7a, 7b, 7c, 7d verlaufen.

Die Gleitringdichtung kommt mit wenig Raum und ohne aufwendige Mittel aus.

## Patentansprüche

1. Gleitringdichtung zum Abdichten eines drehbaren Rohres (1) gegen ein stehendes Gehäuse (2a, 2b)
mit einem mit dem Rohr (1) verbundenen koaxial zum Rohr (1) angeordneten mit dem Rohr (1) drehbaren Dichtring (3), mit einem mit dem Gehäuse (2a, 2b) über einen flexiblen Kompensator (4a, 4b) zum Kompensieren von Längenänderungen des Rohres (1) verbundenen Gegenring (5, 5a, 5b), der mit einer stirnseitigen Dichtfläche an eine stirnseitige Dichtfläche des Dichtringes (3) zum Abdichten des Gehäuses (2a, 2b) gegen das Rohr (1) anpreßbar ist,
und mit mindestens einer Schiene (7, 7a, 7b, 7c, 7d), die am stehenden Gehäuse (2a, 2b) befestigt ist und auf der mindestens eine Rolle (6, 6a, 6b) abgestützt und rollend verschiebbar ist,
**dadurch gekennzeichnet**, daß an der Umfangsfläche des Gegenringes (5, 5a, 5b) die mindestens eine Rolle (6, 6a, 6b), deren Drehachse senkrecht auf der Umfangsfläche des Gegenringes (5, 5a, 5b) steht,
zum Tragen des Gegenringes (5, 5a, 5b) und des Kompensators (4a, 4b) angeordnet ist und daß zum Anpressen des Gegenringes (5, 5a, 5b) an den Dichtring (3) die Schiene (7, 7a, 7d) gegen die Richtung der Achse des drehbaren Dichtringes (3) mit einem Gefälle zum Dichtring (3) hin geneigt ist und für die Rollen (6, 6a, 6b) eine schiefe Ebene bildet.

2. Gleitringdichtung nach Anspruch 1,
**dadurch gekennzeichnet**, daß an den Dichtring (3) an zwei gegenüberliegenden stirnseitigen Dichtflächen jeweils eine stirnseitige Dichtfläche eines von zwei Gegenringen (5,. 5a, 5b) anpreßbar ist zum Abdichten des Rohres (1) gegen zwei Gehäuse (2a, 2b).

3. Gleitringdichtung nach einem der Ansprüche 1 oder 2,
**dadurch gekennzeichnet**, daß parallel zur Schiene (7, 7a, 7b, 7c, 7d) eine weitere Schiene als Führungsschiene (8, 8a, 8b, 8c, 8d) angeordnet ist und daß die Rolle (6, 6a, 6b) zwischen beiden Schienen (7 und 8, 7a und 8a, 7b und 8b, 7c und 8c, 7d und 8d) geführt ist.

4. Gleitringdichtung nach einem der Ansprüche 1 bis 3,
**dadurch gekennzeichnet**, daß die Rolle (6) einseitig oder beidseitig einen Spurkranz (10, 11) aufweist zur Führung der Rolle (6) auf einer Schiene (7) oder auf einer Schiene (7) und auf einer Führungsschiene (8).

5. Gleitringdichtung nach Anspruch 4,
**dadurch gekennzeichnet**, daß der Abstand der Schiene (7) von der Führungsschiene (8) geringfügig größer ist als der Abrolldurchmesser (d) der Rolle (6).

6. Gleitringdichtung nach einem der Ansprüche 4 oder 5,
**dadurch gekennzeichnet**, daß die Rolle (6) beidseitig jeweils einen Spurkranz (10 und 11) aufweist und daß der Abstand (a) der Spurkränze (10 und 11) voneinander geringfügig größer ist als die Breite der Schiene (7) oder der Schiene (7) und der Führungsschiene (8).

7. Gleitringdichtung nach einem der Ansprüche 1 bis 6,
**dadurch gekennzeichnet**, daß der Gegenring (5) in seiner dem Gleitring (3) zugewandten Berührungsseite Nuten (12) zur Aufnahme von Schmier- oder Gleitmittel aufweist.

8. Gleitringdichtung nach Anspruch 7,
**dadurch gekennzeichnet**, daß die Nuten (12) auf dem Gegenring (5) gleichmäßig verteilt schräg zum Durchmesser des Gegenringes (5) angeordnet sind.

9. Gleitringdichtung nach einem der Ansprüche 1 bis 8,
**dadurch gekennzeichnet**, daß die Schiene (7) über ein Gelenk (13) mit dem stehenden Gehäuse (2) verbunden ist und daß ihr Neigungswinkel gegen die Achse des drehbaren Dichtringes (3) variabel ist.

## Claims

1. A slide ring seal for sealing a rotatable pipe (1) relative to a fixed housing (2a, 2b), with a sealing ring (3) which is arranged coaxial to the pipe (1), is connected thereto and is rotatable therewith, with a counter ring (5, 5a, 5b) which is connected to the housing (2a, 2b) via a flexible compensator (4a, 4b) for compensating for changes in the length of the pipe (1) and can be pressed with an end-face sealing surface against an end-face sealing surface of the sealing ring (3) in order to seal the housing (2a, 2b) relative to the pipe (1), and with at least one rail (7, 7a, 7b, 7c, 7d), which is secured to the fixed housing (2a, 2b) and on which at least one roller (6, 6a, 6b) is supported so as to be displaceable by rolling, characterised in that the at least one roller (6, 6a, 6b), whose axis of rotation is perpendicular to the circumferential surface of the counter ring (5, 5a, 5b), is arranged on the circumferential surface of the counter ring (5, 5a, 5b) for supporting the counter ring (5, 5a, 5b) and the compensator (4a, 4b), and in order to press the counter ring (5, 5a, 5b) against the sealing ring (3) the rail (7, 7a, 7b) is inclined downwards towards the sealing ring (3) relative to the direction of the axis of the rotatable sealing ring (3) and forms an inclined plane for the rollers (6, 6a, 6b).

2. A slide ring seal according to claim 1, characterised in that an end-face sealing surface of one of two counter rings (5, 5a, 5b) can be pressed in each case against one of two oppositely arranged end-face sealing surfaces of the sealing ring (3) in order to seal the pipe (1) relative to two housings (2a, 2b).

3. A slide ring seal according to one of claims 1 or 2, characterised in that a further rail is arranged as a guide rail (8, 8a, 8b, 8c, 8d) parallel to the rails (7, 7a, 7b, 7c, 7d) and the roller (6, 6a, 6b) is guided between both rails (7 and 8, 7a and 8a, 7b and 8b, 7c and 8c, 7d and 8d).

4. A slide ring seal according to one of claims 1 to 3, characterised in that on one side or on both sides the roller (6) comprises a wheel flange (10, 11) for guiding the roller (6) on a rail (7) or on a rail (7) and a guide rail (8).

5. A slide ring seal according to claim 4, characterised in that the distance between the rail (7) and the guide rail (8) is slightly greater than the rolling diameter (d) of the roller (6).

6. A slide ring seal according to one of claims 4 or 5, characterised in that the roller (6) comprises a wheel flange (10 and 11) on each side and the distance (a) between the wheel flanges (10 and 11) is slightly greater than the width of the rail (7) or the rail (7) and the guide rail (8).

7. A slide ring seal according to one of claims 1 to 6, characterised in that, on its contact side facing the slide (sic) ring (3), the counter ring (5) comprises grooves (12) for receiving a lubricant.

8. A slide ring seal according to claim 7, characterised in that the grooves (12) are uniformly distributed over the counter ring (5) and are arranged at an angle to the diameter of the counter ring (5).

9. A slide ring seal according to one of claims 1 to 8, characterised in that the rail (7) is connected via a joint (13) to the fixed housing (2) and its angle of inclination relative to the axis of the rotatable sealing ring (3) is variable.

## Revendications

1. Garniture mécanique d'étanchéité pour assurer l'étanchéité d'un tuyau (1) rotatif par rapport à un bâti (2a, 2b) fixe
comprenant un anneau d'étanchéité (3) relié au tuyau (1), coaxial au tuyau (1) et tournant avec le tuyau (1), un contre-anneau (5, 5a, 5b), qui est relié au bâti (2a, 2b) par l'intermédiaire d'un compensateur (4a, 4b) flexible destiné à compenser des variations de longueur du tuyau (1) et peut être appliqué par une surface d'étanchéité frontale contre une surface d'étanchéité frontale de l'anneau d'étanchéité (3) afin d'assurer l'étanchéité du bâti (2a, 2b) par rapport au tuyau (1)
et comprenant au moins un rail (7, 7a, 7b, 7c, 7d), qui est fixé sur le bâti (2a, 2b) fixe et sur lequel au moins un galet (6, 6a, 6b) est supporté et peut se déplacer en roulant,
**caractérisée** par le fait que le galet (6, 6a, 6b), au nombre d'au moins un, dont l'axe de rotation est disposé perpendiculairement sur la surface périphérique du contre-anneau (5, 5a, 5b), est disposé sur la surface périphérique du contre-anneau (5, 5a, 5b)
pour porter le contre-anneau (5, 5a, 5b) et le compensateur (4a, 4b), que pour appliquer le contre-anneau (5, 5a, 5b) contre l'anneau d'étanchéité (3), le rail (7, 7a, 7d) est incliné dans la direction de l'axe de l'anneau d'étanchéité (3) tournant avec une pente par rapport à l'anneau d'étanchéité (3) et forme un plan incliné pour les galets (6, 6a, 6b).

2. Garniture d'étanchéité mécanique selon la revendication 1,
**caractérisée** par le fait qu'une surface d'étanchéité frontale de l'un parmi deux contre-anneaux (5, 5a, 5b) peut être appliquée respectivement contre chacune des deux surfaces d'étanchéité frontales de l'anneau d'étanchéité (3), pour assurer l'étanchéité du tuyau (1) par rapport à deux bâtis (2a, 2b).

3. Garniture d'étanchéité mécanique selon l'une des revendications 1 ou 2,
**caractérisée** par le fait qu'un autre rail constituant un rail de guidage (8, 8a, 8b, 8c, 8d) est disposé parallèlement au rail (7, 7a, 7b, 7c, 7d) et que le galet (6, 6a, 6b) est guidé entre les deux rails (7 et 8, 7a et 8a, 7b et 8b, 7c et 8c, 7d et 8d).

4. Garniture d'étanchéité mécanique selon l'une des revendications 1 à 3,
**caractérisée** par le fait que le galet (6) présente d'un côté ou des deux côtés un boudin (10, 11) pour guider le galet (6) sur un rail (7) ou sur un rail (7) et sur un rail de guidage (8).

5. Garniture mécanique d'étanchéité selon la revendication 4,
**caractérisée** par le fait que l'écartement du rail (7) par rapport au rail de guidage (8) est légèrement supérieur au diamètre de roulement (d) du galet (6).

6. Garniture d'étanchéité mécanique selon l'une des revendications 4 ou 5,
**caractérisée** par le fait que le galet (6) présente des deux côtés un boudin (10 et 11) et que l'écartement (a) entre les boudins (10 et 11) est légèrement supérieur à la largeur du rail (7) ou du rail (7) et du rail de guidage (8).

7. Garniture d'étanchéité mécanique selon l'une des revendications 1 à 6,
**caractérisée** par le fait que le contre-anneau (5) présente dans son côté de contact tourné vers l'anneau glissant (3), des encoches (12) destinées à recevoir un lubrifiant ou un agent antifriction.

8. Garniture d'étanchéité mécanique selon la revendication 7,
**caractérisée** par le fait que les encoches (12) sont réparties régulièrement sur le contre-anneau (5) et sont disposées en oblique par rapport au diamètre du contre-anneau (5).

9. Garniture d'étanchéité mécanique selon l'une des revendications 1 à 8,
**caractérisée** par le fait que le rail (7) est relié au bâti (2) fixe par une articulation (13) et que son angle d'inclinaison par rapport à l'axe de l'anneau d'étanchéité (3) tournant est variable.
